# EUROPEAN PATENT APPLICATION

(11) **EP 4 187 889 A1**
(43) Date of publication of application: **31.05.2023**
(21) Application number: 22854450.8
(22) Date of filing: 06.09.2022
(51) Int. Cl.: H04M 1/02

(54) **HOUSING ASSEMBLY, PREPARATION METHOD THEREFOR, AND TERMINAL**

(30) Priority: 09.10.2021 CN 202111177447
(71) Applicant: Honor Device Co., Ltd., Shenzhen, Guangdong 518040 (CN)
(72) Inventor: GAO, Chengjie, Shenzhen, Guangdong 518040 (CN); LU, Yao, Shenzhen, Guangdong 518040 (CN)
(74) Representative: Epping - Hermann - Fischer
(86) International application number: PCT/CN2022/117318
(87) International publication number: WO 2023/056816

(57) **Abstract**

This application provides a housing assembly, including a woven glass fiber plate layer, a cover layer, an ink layer, an optical coating layer, a texture layer, and a plastic substrate layer that are sequentially laminated; a heat shrinkage difference between the woven glass fiber plate layer, the cover layer, and the ink layer does not exceed 20%; a thickness of the cover layer is less than 0.2 mm; a thickness of the ink layer is less than 0.1 mm; a total light transmittance of the cover layer and the ink layer does not exceed 0.05%; and an elongation of the plastic substrate layer is not less than 150%, and a tensile strength of the plastic substrate layer is not less than 45 MPa. This application further provides a method for preparing the foregoing housing assembly and a terminal that includes the housing assembly. In this application, a woven glass fiber plate is used as a support structure of a housing assembly, and a woven texture of the woven glass fiber plate is covered by using a cover layer and an ink layer that meet specific performance, so that a laminated structure that has a glare effect presents an advanced glare effect on the glass housing assembly.

## Description

This application claims priority to Chinese Patent Application No. 202111177447.2, filed with the China National Intellectual Property Administration on October 09, 2021 and entitled "HOUSING ASSEMBLY, PREPARATION METHOD THEREOF, AND TERMINAL", which is incorporated herein by reference in its entirety.

### TECHNICAL FIELD

This application relates to the field of terminals, and in particular, to a housing assembly, a preparation method thereof, and a terminal.

### BACKGROUND

Electronic devices such as smart phones and tablet computers use a glass fiber plate as a battery cover, and therefore are characterized by high toughness and light weight, and are not only resistant to fall but also thinner. To obtain enough strength, the glass fiber plate is generally formed by a woven glass cloth. However, the woven glass cloth has a woven texture. In a 3D molding process, the woven texture may be easily rubbed into an optical decorative layer, affecting a decorative effect. As a result, an advanced decorative effect cannot be achieved in the industry.

### SUMMARY

This application provides a housing assembly, a preparation method thereof, and a terminal, so as to resolve a problem that a glass fiber plate cannot be used as a battery cover to achieve an advanced decorative effect.

To achieve the foregoing objective, the following technical solutions are used in this application: A first aspect of this application provides a housing assembly, including a woven glass fiber plate layer, a cover layer, an ink layer, an optical coating layer, a texture layer, and a plastic substrate layer that are sequentially laminated; a heat shrinkage difference between the woven glass fiber plate layer, the cover layer, and the ink layer does not exceed 20%; a thickness of the cover layer is less than 0.2 mm; a thickness of the ink layer is less than 0.1 mm; a total light transmittance of the cover layer and the ink layer does not exceed 0.05%; and an elongation of the plastic substrate layer is not less than 150%, and a tensile strength of the plastic substrate layer is not less than 45 MPa.

In an embodiment, the optical coating layer, the texture layer, and the plastic substrate layer may be laminated with the woven glass fiber plate layer, the cover layer, the ink layer, and the like, layer by layer, to form a laminated structure. In another embodiment, the optical coating layer, the texture layer, and the plastic substrate layer may alternatively form a decorative film, and form a laminated structure with the woven glass fiber plate layer, the cover layer, the ink layer, and the like in a form of an integral film. In another embodiment, the ink layer, the optical coating layer, the texture layer, and the plastic substrate layer may form a decorative film, and form a laminated structure with the woven glass fiber plate layer and the cover layer in a form of an integral film. In this application, the laminated structure formed of the optical coating layer, the texture layer, and the plastic substrate layer has a glare effect similar to a CD texture or a laser texture. In this application, a woven glass fiber plate is used as a support structure of a housing assembly. A cover layer meeting requirements that a heat shrinkage difference does not exceed 20% and a thickness does not exceed 0.2 mm, and an ink layer meeting requirements that a heat shrinkage difference does not exceed 20% and a thickness does not exceed 0.1 mm, and a total light transmittance of the two layers does not exceed 0.05% are used to cover a woven texture of the woven glass fiber plate, so as to avoid that the woven texture of the woven glass fiber plate is rubbed into a decorative film in a thermoforming process, so that the foregoing laminated structure with a glare effect presents an advanced glare effect on the glass housing assembly.

To ensure an appearance of the housing assembly, the plastic substrate layer of the decorative film needs to meet requirements that a heat shrinkage difference does not exceed 20%, a thickness is less than or equal to 0.2 mm, and a light transmittance is less than or equal to 0.05%. In addition, plastic properties of the plastic substrate layer of the decorative film need to meet the following requirements: An elongation is not less than 150%, a tensile strength is not less than 50 MPa, and phenomena such as cracks do not occur during 3D stretching.

In this application, the cover layer may be a structure such as an adhesive layer, a cover resin layer, a packing layer, a unidirectional glass fiber plate layer, or the like. On the one hand, the cover layer has a heat shrinkage similar to that of a woven glass fiber plate layer, and when 3D hot pressing is performed, a woven texture is not rubbed into a surface of a housing assembly, which does not affect an appearance of the cover layer and display of another optical texture, such as glare. On the other hand, the cover layer has a relatively small thickness and a relatively low light transmittance, and enhances display of advanced optical effects such as glare.

In an embodiment of this application, a matte layer may be further formed at the plastic substrate layer, so that the housing assembly has matte and glare effects, and the housing assembly and the terminal are more beautiful.

According to another aspect, this application provides a method for preparing the foregoing housing assembly.

In an embodiment, the housing assembly is prepared according to the following method, that is, a woven glass fiber cloth prepreg is first obtained through 3D molding and then laminated with another decorative layer:
performing 3D hot pressing molding on the woven glass fiber cloth prepreg, and then sequentially laminating a cover layer and a decorative layer for hot pressing for the second time, to obtain the housing assembly, where
the decorative layer includes an ink layer, an optical coating layer, a texture layer, and a plastic substrate layer that are laminated, and the ink layer is in contact with the cover layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

In another embodiment, the housing assembly is prepared according to the following method, that is, all layers are pre-laminated and then 3D molded:
pre-laminating a cover layer and a decorative layer, to obtain a pre-laminated layer; and laminating the pre-laminated layer and a woven glass fiber cloth prepreg, and then performing 3D hot pressing molding, to obtain the housing assembly, where
the decorative layer includes an ink layer, an optical coating layer, a texture layer, and a plastic substrate layer that are laminated, and the ink layer is in contact with the cover layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

In an embodiment, the housing assembly is prepared according to the following method:
impregnating and curing a woven glass fiber cloth in a thermoplastic resin, to obtain a thermoplastic glass fiber plate;
pre-laminating the thermoplastic glass fiber plate, a cover layer, and a decorative layer, and performing plane hot pressing to obtain a plane laminated structure;
softening the plane laminated structure and performing 3D thermal bending molding, to obtain the housing assembly; where
the decorative layer includes an ink layer, an optical coating layer, a texture layer, and a plastic substrate layer that are laminated, and the ink layer is in contact with the cover layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

According to another aspect, this application provides a terminal that includes the foregoing housing assembly. The terminal uses the foregoing housing assembly as a battery cover or a back cover, and has advanced optical decorative effects such as matte and glare, and therefore is beautiful.

It should be understood that the description of technical features, technical solutions, beneficial effects, or similar expressions in this application does not imply that all features and advantages can be achieved in any single embodiment. On the contrary, it may be understood that the description of features or beneficial effects means that specific technical features, technical solutions, or beneficial effects are included in at least one embodiment. Therefore, the description of technical features, technical solutions, or beneficial effects in this specification does not necessarily mean the same embodiment. Further, the technical features, technical solutions, and beneficial effects described in this embodiment can be further combined in any suitable manner. A person skilled in the art will understand that the embodiments can be implemented without one or more specific technical features, technical solutions, or beneficial effects of the specific embodiments. In other embodiments, additional technical features and beneficial effects can also be identified in specific embodiments that do not reflect all embodiments.

### BRIEF DESCRIPTION OF DRAWINGS

To describe technical methods in embodiments of this application more clearly, the following briefly describes accompanying drawings required for describing the embodiments.
FIG. 1 is a schematic diagram of a structure of a terminal according to an embodiment of this application;
FIG. 2 is a schematic diagram of a structure of a battery cover according to a first embodiment of this application;
FIG. 3 is a flowchart of a first preparation process of the battery cover according to the first embodiment of this application;
FIG. 4 is a flowchart of a second preparation process of the battery cover according to the first embodiment of this application;
FIG. 5 is a flowchart of a third preparation process of the battery cover according to the first embodiment of this application;
FIG. 6 is a schematic diagram of a structure of a battery cover according to a second embodiment of this application; and
FIG. 7 is a schematic diagram of a structure of a battery cover according to a third embodiment of this application.

### DESCRIPTION OF EMBODIMENTS

In embodiments of this application, the word such as "as an example" or "for example" is used to represent giving an example, an illustration, or a description. In embodiments of this application, any embodiment or design solution described as "as an example" or "for example" shall not be explained as being preferred or advantageous over other embodiments or design solutions. To be precise, the use of the word such as "as an example" or "for example" is intended to present a related concept in a specific manner.

A terminal mentioned in this application may be any device with communication and storage functions, such as a smartphone, a cellular phone, a cordless phone, a session initiation protocol (Session Initiation Protocol, SIP) phone, a tablet computer, a personal digital assistant (Personal Digital Assistant, PAD), a notebook computer, a digital camera, an e-book reader, a portable multimedia player, a handheld device with a wireless communication function, a computing device or another processing device connected to a wireless modem, an in-vehicle device, a wearable device, and a 5G terminal device, which is not limited in the embodiments of this application.

In embodiments of this application, a glass fiber plate means a woven glass fiber plate, which is also referred to as a woven glass fiber composite plate. The glass fiber plate is formed by a glass fiber cloth made of glass fiber woven according to the warp and weft, and then reinforced with thermoplastic or thermosetting resin.

In embodiments of this application, a light transmittance means a light transmission capability of a medium, and affects a visual effect of the medium; and a thickness means a distance between upper and lower surfaces of the medium. A person skilled in the art may understand that a thickness affects a light transmittance. The light transmittance in embodiments of this application means a light transmittance of each layer of a battery cover of a mobile phone in a general thickness. For example, to control a thickness of a battery cover of a mobile phone, a thickness of an adhesive layer generally does not exceed 0.2 mm, and a light transmittance of an adhesive layer also means a light transmittance when a thickness of the adhesive layer does not exceed 0.2 mm.

A heat shrinkage described in this solution means a percentage of a difference between sizes of a film before and after hot processing, including a longitudinal heat shrinkage and a lateral heat shrinkage. A longitudinal heat shrinkage and a lateral heat shrinkage of a woven glass fiber plate are relatively consistent, and are both described in this solution as a heat shrinkage.

An optical texture described in the present invention means a linear texture presented by a laminated film under an action of light, and includes effects such as matte and glare. The matte means that the laminated film is hairy, and has an effect similar to that of frosted glass. The glare means a texture in which the laminated film has different brightness and colors, and presents a texture effect similar to light reflected by an optical disc or a laser texture effect.

In the present invention, both tensile strength and elongation are performance parameters that represent plasticity of a material, and the tensile strength is also referred to as a tensile strength, which means a maximum tensile stress on a sample until the sample is broken in a tensile test. The elongation is a percentage of a ratio of a total deformation ΔL of a gauge segment after the sample is stretched and broken to an original gauge length L: δ=ΔL/L×100%.

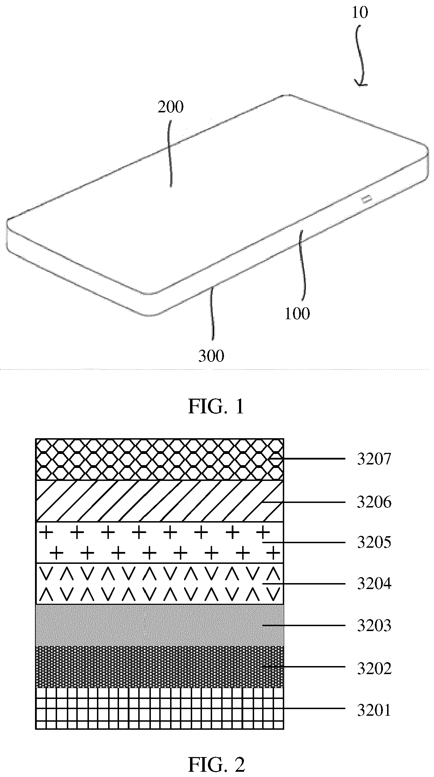

This application uses a smartphone as an example for description. FIG. 1 is a schematic diagram of a structure of a terminal according to an embodiment of this application. In an embodiment, the terminal 10 includes a middle frame 100, a display 200, and a battery cover 300. The middle frame 100 connects the display 200 and the battery cover 300 to form a storage space, and components such as a main board, a memory, and a power supply of the terminal 10 are disposed in the storage space.

A glass fiber plate has good mechanical strength and is currently used to prepare a three-dimensional (3D) battery cover of a mobile phone. However, in a preparation process, the glass fiber plate and other plates need to be heated to a softening temperature above which deformation can occur. However, woven glass fiber inside the glass fiber plate is inorganic and does not soften. Therefore, a woven texture of the glass fiber plate may be easily rubbed into the other plates during the deformation, which affects an appearance effect of the battery cover. In a solution, thermal-sensitive adhesive, non-woven fabrics, and polyurethane (PU) matte leather are laminated on the glass fiber plate to obtain a matte texture. However, a back cover of the mobile phone obtained in this solution has a tailbone structure, and there are problems such as skin shrinkage, low yield rates, and high processing costs. In another solution, a matte metal texture is obtained by spraying a primer coat, spraying a floating coat, spraying a color coat, and spraying a matte top coat. However, it is difficult to achieve a glare effect in this solution. In this solution, the foregoing problem is resolved by setting a laminated structure. On the one hand, a woven texture of the glass fiber plate is covered. On the other hand, the woven texture of the glass fiber plate is not rubbed into another plate, thereby achieving an advanced texture effect of a battery cover, especially a glare effect. FIG. 2 is a schematic diagram of a structure of a battery cover according to a first embodiment of this application. In this embodiment, the battery cover 300 includes a woven glass fiber plate layer 3201, an adhesive layer 3202, an ink layer 3203, an optical coating layer 3204, a texture layer 3205, and a plastic substrate layer 3206 that are sequentially laminated.

As a main structure of the battery cover 300, the woven glass fiber plate layer 3201 has a relatively high mechanical strength and a relatively low appearance roughness, and mainly plays a supporting role. In an embodiment, the woven glass fiber plate layer 3201 is obtained by laminating a multi-layer woven glass fiber cloth prepreg, the woven glass fiber cloth prepreg is obtained by coating a woven glass fiber cloth in a resin solution and then performing drying, and the woven glass fiber cloth is woven of glass fiber. The glass fiber includes but is not limited to E-glass fiber, S-glass fiber, C-glass fiber, A-glass fiber, and the like. In an embodiment, a resin solution includes a matrix resin, a curing agent, a promoter, and a solvent. In an embodiment, the matrix resin is a thermosetting resin, and includes but is not limited to a bisphenol A epoxy resin, a phenolic epoxy resin, an alicyclic epoxy resin, a nitrogen-containing multifunctional epoxy resin, a phenolic resin, a bismaleimide resin, a benzoxazine resin, and the like. In an embodiment, the curing agent may be selected from a phenolic type curing agent, an acid anhydride curing agent, an amine curing agent, a dicyandiamide curing agent, or the like, for example, a nadikic anhydride, a methylnadikic anhydride, a methyl tetrahydrophthalic anhydride, a diphenyl ether tetra-phthalic anhydride, a benzophenonetetracarboxylic dianhydride, a methyl-cyclohexene-tetracarboxylic anhydride, a diphenylbenzidine, or a dicyandiamide. In an embodiment, the promoter includes an imidazole promoter or an amine promoter, such as imidazole or 2-methylimidazole. In an embodiment, the thermosetting resin is a thermosetting epoxy resin, and the curing agent is an amine curing agent. In an embodiment, the resin solution includes a thermoplastic resin and a solvent, and the thermoplastic resin includes but is not limited to a thermoplastic polyurethane, a thermoplastic polyamide, a thermoplastic polyetherketone, a thermoplastic polyphenylene sulfide, and the like.

A person skilled in the art may understand that "multi-layer" in embodiments of this application means at least two or more layers, for example, two layers, three layers, and four layers. A thickness of each layer of woven glass fiber cloth prepreg is 0.003-0.12 mm, and a thickness of the woven glass fiber plate layer 3001 is 0.05-1 mm. For example, when a thickness of a woven glass fiber cloth prepreg is 0.1 mm, four layers are required to prepare a woven glass fiber plate layer with a thickness of 0.4 mm; and when a thickness of the woven glass fiber cloth prepreg is 0.01 mm, 20 layers are required to prepare a woven glass fiber plate layer with a thickness of 0.2 mm. In an embodiment, to take into account a thickness and mechanical strength of the battery cap 300, a thickness of the woven glass fiber plate layer is 0.1-0.5 mm.

In an embodiment, the ink layer 3203, the optical coating layer 3204, the texture layer 3205, and the plastic substrate layer 3206 form a laminated structure of a decorative film with a glare effect. The plastic substrate layer 3206 is used as a substrate layer of the texture layer 3205, and may also be used as a substrate for coating of more special effects such as a matte effect and a highlight effect. In an embodiment, the plastic substrate layer 3206 includes but is not limited to a polycarbonate (PC), a glass fiber reinforced polycarbonate, a polyethylene terephthalate (PET), an aramid fiber reinforced PET such as a Kevlar reinforced PET, a polyvinyl chloride (PVC), a thermoplastic polyurethane elastomer (TPU), a polycarbonate (PC)/thermoplastic polyurethane elastomer (TPU) composite material, and the like. In an embodiment, a thickness of the plastic substrate layer 3206 is 0.01~0.15 mm. In an embodiment, a thickness of the plastic substrate layer 3206 is 0.05~0.13 mm.

In an embodiment, an elongation of the plastic substrate layer 3206 is not less than 150%, and a tensile strength is not less than 45 MPa. In an embodiment, an elongation of the plastic substrate layer 3206 is not less than 180%, and a tensile strength is not less than 50 MPa. In an embodiment, an elongation of the plastic substrate layer 3206 is not less than 200%, and a tensile strength is not less than 50 MPa. A plastic substrate layer that meets the foregoing condition can ensure that no appearance defect occurs in an obtained laminated structure in a process of preparing the 3D battery cover. When the tensile strength and the elongation are lower than the foregoing condition, the plastic substrate layer is broken when 3D thermal bending is performed to prepare the 3D battery cover, which affects an appearance of the battery cover.

The texture layer 3205 and the optical coating layer 3204 may provide an optical texture effect with rich light and shadow effects, to achieve diversified appearance decorative effects of the battery cover 300. In an embodiment, the texture layer 3205 and the optical coating layer 3204 may be obtained by using the following method: Transferring an optical texture onto the plastic substrate layer 3206 to form a UV film (that is, the texture layer 3205) through UV curing (UV), and then performing physical vapor deposition (PVD) coating on the UV film to form the optical coating layer 3204. In an embodiment, the texture layer 3205 and the optical coating layer 3204 may be obtained by using the following method: Directly performing laser etching at the plastic substrate layer 3206 to form the texture layer 3205, and then performing PVD coating to form the optical coating layer 3204. In an embodiment, the optical texture may be a texture that can achieve a glare effect, such as a CD texture or a laser texture. In an embodiment, the PVD coating may be an optical coating layer formed by performing evaporation coating, magnetron sputtering coating, or ion coating with a metal, a metal oxide, or a non-metal oxide as a target material. To achieve a desired optical texture effect, a person skilled in the art may select a single target material for coating, or may select two or more different target materials for coating, which is not limited in this application. In an embodiment, the metal target includes but is not limited to aluminum, titanium, zirconium, chromium, niobium, and the like; the metal oxide target includes but is not limited to titanium dioxide; and the non-metal oxide target includes but is not limited to silicon dioxide. In an embodiment, a thickness of the texture layer 3205 is 2~15 µm. In an embodiment, a thickness of the optical coating layer 3204 is 50 nm to 600 nm.

The ink layer 3203 is used as a protective layer of the optical coating layer 3204, and is also used to implement a shielding function with the adhesive layer 3202. In an embodiment, a thickness of the ink layer 3203 is 10-60 µm. In an embodiment, a thickness of the ink layer 3203 is 15-50 µm. In an embodiment, the ink layer 3203 may be a black ink layer, a white ink layer, or a gray ink layer, and a light transmittance thereof is less than 0.05%. In an embodiment, a light transmittance of the ink layer 3203 is 0. The ink layer 3203 may be formed at the optical coating layer through screen printing, coating, or spraying.

In an embodiment, a total thickness of the ink layer 3203, the optical coating layer 3204, the texture layer 3205, and the plastic substrate layer 3206 is less than 0.15 mm.

In this solution, the adhesive layer 3202 and the ink layer 3203 are used to shield a fiber woven texture, so that display of an optical texture effect is not affected after 3D hot pressing. In an embodiment, a thickness of the adhesive layer 3202 is less than 0.2 mm. In an embodiment, a thickness of the adhesive layer 3202 is less than 0.15 mm. In an embodiment, a light transmittance of the adhesive layer 3202 is less than 0.05%. In an embodiment, a light transmittance of the adhesive layer 3202 is 0. In an embodiment, a haze value of the adhesive layer is less than 220. In an embodiment, the adhesive layer 3202 may be a light shielding tape, a light shielding adhesive, or the like.

In an embodiment, a total light transmittance of the adhesive layer 3202 and the ink layer 3203 is less than 0.05%. In an embodiment, a total light transmittance of the adhesive layer 3202 and the ink layer 3203 is 0. In an embodiment, a difference between a heat shrinkage of the adhesive layer 3202 and a heat shrinkage of the woven glass fiber plate layer 3201 and a difference between a heat shrinkage of the ink layer 3203 and the heat shrinkage of the woven glass fiber plate layer 3201 do not exceed 20% of the heat shrinkage of the woven glass fiber plate layer 3201. For example, the heat shrinkage of the woven glass fiber plate layer 3201 is 0.2, and the heat shrinkage of an adhesive layer 3202 and the heat shrinkage of an ink layer 3203 are 0.16-0.24. When the heat shrinkage of the woven glass fiber plate layer 3201 and the heat shrinkage of the adhesive layer 3202 and the ink layer 3203 remain within the foregoing range, it can be ensured that the woven glass fiber plate layer, the adhesive layer, and the ink layer are deformed in a same manner when deforming under heat, so that a texture of the woven glass fiber are not rubbed into the adhesive layer, and the ink layer, which does not affect a shielding effect of the adhesive layer and the ink layer. In an embodiment, a difference between a heat shrinkage of the adhesive layer 3202 and a heat shrinkage of the woven glass fiber plate layer 3201 and a difference between a heat shrinkage of the ink layer 3203 and the heat shrinkage of the woven glass fiber plate layer 3201 do not exceed 15% of the heat shrinkage of the woven glass fiber plate layer 3201. For example, the heat shrinkage of the woven glass fiber plate layer 3201 is 0.2, and the heat shrinkage of an adhesive layer 3202 and the heat shrinkage of an ink layer 3203 are 0.16-0.23. In an embodiment, a difference between a heat shrinkage of the adhesive layer 3202 and a heat shrinkage of the woven glass fiber plate layer 3201 and a difference between a heat shrinkage of the ink layer 3203 and the heat shrinkage of the woven glass fiber plate layer 3201 do not exceed 10% of the heat shrinkage of the woven glass fiber plate layer 3201. For example, the heat shrinkage of the woven glass fiber plate layer 3201 is 0.2, and the heat shrinkage of an adhesive layer 3202 and the heat shrinkage of an ink layer 3203 are 0.18-0.28. In this solution, the total light transmittance of the adhesive layer 3202 and the ink layer 3203 is less than 0.05%, and when the difference between the heat shrinkage of the adhesive layer 3202 and the heat shrinkage of the woven glass fiber plate layer 3201 and the difference between the heat shrinkage of the ink layer 3203 and the heat shrinkage of the woven glass fiber plate layer 3201 do not exceed 20% of the heat shrinkage of the woven glass fiber plate layer 3201, a fiber woven texture can be covered, and no fiber woven texture is formed at the adhesive layer 3202 and even the ink layer 3203 during hot pressing, so that display of an optical texture such as glare is not affected.

It may be understood that a heat shrinkage described in this solution means a percentage of a difference between sizes of a film before and after hot processing, including a longitudinal heat shrinkage and a lateral heat shrinkage, and a longitudinal heat shrinkage and a lateral heat shrinkage of a woven glass fiber plate are relatively consistent, and are both described in this solution as a heat shrinkage.

In an embodiment, the battery cover 300 further includes a matte layer 3207 disposed at the plastic substrate layer 3206, so that the battery cover 300 has both a glare effect and an advanced matte effect. The matte layer 3207 may be obtained by performing flow coating, spraying, or inkjetting on the plastic base layer 3206 by using a matte coating.

In an embodiment, the ink layer 3203, the optical coating layer 3204, the texture layer 3205, the plastic substrate layer 3206, and the matte layer 3207 form a laminated structure of a decorative film with glare and matte effects.

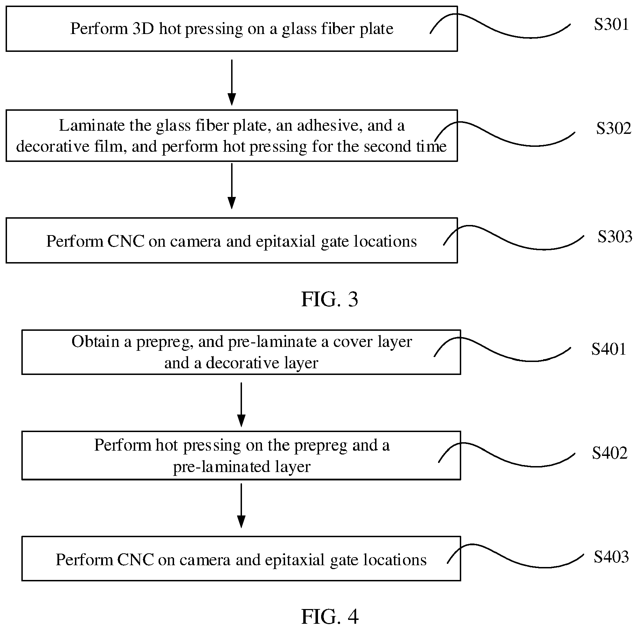

FIG. 3 is a flowchart of a first preparation process of the battery cover according to a first embodiment of this application. In an embodiment, the battery cover is prepared according to the following steps:
Step S301: Coat a woven glass fiber cloth in a resin solution including an epoxy resin and an amine curing agent, and perform drying to obtain a prepreg; and
   laminate three to four layers of prepreg in a 3D mold, and perform hot pressing at 120~200°C for 10-30 minutes, to obtain a 3D glass fiber plate.
Step S302: Laminate a decorative film, an adhesive, and the 3D glass fiber plate obtained in step S301 under vacuum and at 40~80°C, place the laminated decorative film, adhesive, and 3D glass fiber plate on a pre-laminating jig, perform hot pressing for the second time at 80-150°C for 30~60s, and then perform cold pressing at normal temperature at 0-1 MPa for 20~100s.

The decorative film includes a laminated structure of an ink layer, an optical coating layer, a texture layer, and a plastic substrate layer. The decorative film has a glare effect, and a film thickness is less than 0.15 mm.

A thickness of the adhesive layer is less than 0.2 mm. Step S303: Perform CNC on camera and epitaxial gate locations, where a total thickness is less than 0.6 mm.

In the embodiment, the prepreg, the adhesive layer, the ink layer, the optical coating layer, the texture layer, and the plastic substrate layer meet the foregoing performance parameters. Details are not described herein again in this application.

In an embodiment, between step S302 and step S303, the preparation process further includes: Step S302a: Spray UV matte at the plastic substrate layer, with a film thickness of 15~22 µm and energy of 800 mJ/cm² to 1000 mJ/cm².

In an embodiment, in step S302, the decorative film includes a laminated structure of an ink layer, an optical coating layer, a texture layer, a plastic substrate layer, and a matte layer. The decorative film has a glare effect and a matte effect, and a film thickness is less than 0.15 mm. In this case, a battery cover with a matte effect can be obtained without performing step S302a.

FIG. 4 is a flowchart of a second preparation process of the battery cover according to a first embodiment of this application. In an embodiment, the battery cover is prepared according to the following steps:
Step S401: Coat a woven glass fiber cloth in a resin solution including an epoxy resin and an amine curing agent, and perform drying to obtain a prepreg;
   pre-laminate a decorative film and an adhesive under vacuum and at 40~80°C to obtain a pre-laminated layer.
Step S402: Laminate the pre-laminated layer and three to four layers of prepreg in a 3D mold, perform hot pressing at 120~200°C at 2-15 MPa for 10-30 minutes, and then perform cold pressing at normal temperature for 8~20 minutes.

The decorative film includes a laminated structure of an ink layer, an optical coating layer, a texture layer, and a plastic substrate layer. The decorative film has a glare effect, and a film thickness is less than 0.15 mm.

A thickness of the adhesive layer is less than 0.2 mm.

Step S403: Perform CNC on camera and epitaxial gate locations, where a total thickness is less than 0.6 mm.

Compared with the first preparation manner in which 3D pre-molding is first performed, and then a decorative film is thermally laminated, the second preparation manner in which the decorative film and the adhesive are pre-laminated, and then laminated with the prepreg to perform whole 3D molding does not cause a case in which a part such as a corner of a 3D pattern is not tightly laminated, which is more conducive to display of a 3D effect.

In the embodiment, the prepreg, the adhesive layer, the ink layer, the optical coating layer, the texture layer, and the plastic substrate layer meet the foregoing performance parameters. Details are not described herein again in this application.

In an embodiment, between step S402 and step S403, the preparation process further includes: Step S402a: Spray UV matte at the plastic substrate layer, with a film thickness of 15~22 µm and an energy of 800 mJ/cm² to 1000 mJ/cm².

In an embodiment, in step S402, the decorative film includes a laminated structure of an ink layer, an optical coating layer, a texture layer, a plastic substrate layer, and a matte layer. The decorative film has a glare effect and a matte effect, and a film thickness is less than 0.15 mm. In this case, a battery cover with a matte effect can be obtained without performing step S402a.

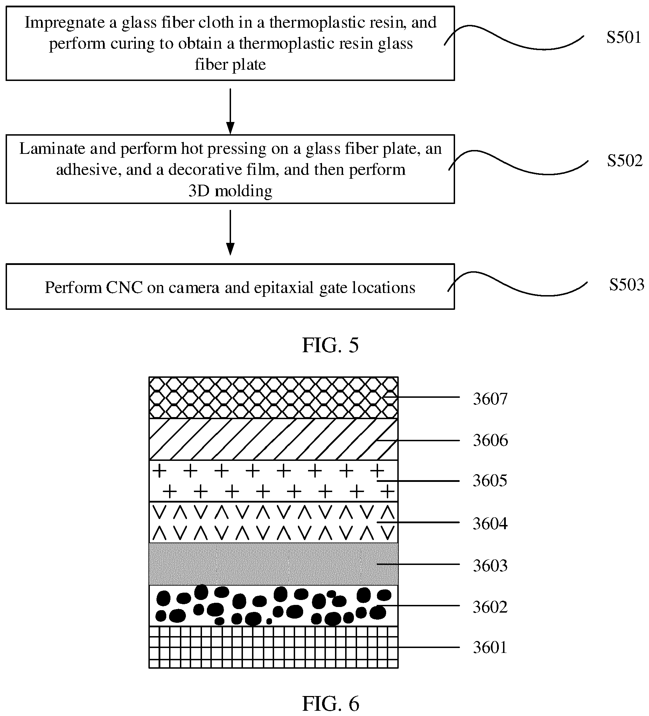

FIG. 5 is a flowchart of a third preparation process of the battery cover according to the first embodiment of this application. In an embodiment, the battery cover is prepared according to the following steps:
Step S501: Coat a woven glass fiber cloth in a thermoplastic resin solution, perform drying to obtain a thermoplastic resin prepreg, and cure the thermoplastic resin prepreg at 150~180°C, to obtain a thermoplastic resin glass fiber plate.
Step S502: Laminate a decorative film, an adhesive, and a thermoplastic resin glass fiber plate, perform heat-pressing at 80~150°C under vacuum for 30~60s, to obtain a plane laminated structure, and then soften the plane laminated structure at 180~200°C for 10-30 minutes in a 3D mold to perform 3D thermal bending molding.

The decorative film includes a laminated structure of an ink layer, an optical coating layer, a texture layer, and a plastic substrate layer. The decorative film has a glare effect, and a film thickness is less than 0.15 mm.

A thickness of the adhesive layer is less than 0.2 mm.

Step S503: Perform CNC on camera and epitaxial gate locations, where a total thickness is less than 0.6 mm.

Compared with the first preparation process and the second preparation process, in the third preparation process, a woven glass fiber plate is prepared by using a thermoplastic resin, which is more conducive to processing of a 3D pattern.

In the embodiment, the prepreg, the adhesive layer, the ink layer, the optical coating layer, the texture layer, and the plastic substrate layer meet the foregoing performance parameters. Details are not described herein again in this application. In addition, in this embodiment, all resins used at the adhesive layer, the ink layer, the optical coating layer, the texture layer, and the plastic substrate layer are thermoplastic resins, so as to meet a process requirement in which a plane laminated structure is formed first by performing hot pressing at a low temperature, and then the plane laminated structure is softened at a high temperature to perform 3D thermal bending molding. In an embodiment, between step S502 and step S503, the preparation process further includes: Step S502a: Spray UV matte at the plastic substrate layer, with a film thickness of 15~22 µm and an energy of 800 mJ/cm² to 1000 mJ/cm².

In an embodiment, in step S502, the decorative film includes a laminated structure of an ink layer, an optical coating layer, a texture layer, a plastic substrate layer, and a matte layer. The decorative film has a glare effect and a matte effect, and a film thickness is less than 0.15 mm. In this case, a battery cover with a matte effect can be obtained without performing step S502a.

FIG. 6 is a schematic diagram of a structure of a battery cover according to a second embodiment of this application. In this embodiment, the battery cover 300 includes a woven glass fiber plate layer 3601, a filling layer 3602, an ink layer 3603, an optical coating layer 3604, a texture layer 3605, and a plastic substrate layer 3606 that are sequentially laminated. Performance parameters of the woven glass fiber plate layer 3601, the ink layer 3603, the optical coating layer 3604, the texture layer 3605, and the plastic substrate layer 3606 are the same as those described above. Details are not described herein again in the present invention.

The ink layer 3603 is used as a protective layer of the optical coating layer 3604, and is also used to implement a shielding function with the filling layer 3602. In an embodiment, a thickness of the ink layer 3603 is 10~60 µm. In an embodiment, a thickness of the ink layer 3603 is 15~50 µm. In an embodiment, the ink layer 3603 may be a black ink layer, a white ink layer, or a gray ink layer, and a light transmittance thereof is less than 0.05%. In an embodiment, a light transmittance of the ink layer 3603 is 0. The ink layer 3603 may be formed at the optical coating layer 3604 through screen printing, coating, or spraying.

In an embodiment, a total thickness of the ink layer 3603, the optical coating layer 3604, the texture layer 3605, and the plastic substrate layer 3606 is less than 0.15 mm.

In this solution, the filing layer 3602 and the ink layer 3603 are used to shield a fiber woven texture, so that display of an optical texture effect is not affected after 3D hot pressing. In an embodiment, a thickness of the filling layer 3602 is less than 0.2 mm. In an embodiment, a thickness of the filling layer 3602 is less than 0.15 mm. In an embodiment, a light transmittance of the filling layer 3602 is less than 0.05%. In an embodiment, a light transmittance of the filling layer 3602 is 0.

In an implementation, the filling layer 3602 is formed of a filler, a solvent, and a film-forming resin, where the filler includes but is not limited to white filler, such as titanium dioxide, and black filler, such as fumed silica, and talcum. The filling layer 3602 may be formed at the ink layer 3603 through coating, casting, or laminating, or directly disposed at the woven glass fiber plate layer 3601, or directly disposed between the ink layer 3603 and the woven glass fiber plate layer 3601 to form a laminated structure through hot pressing.

In an embodiment, a total light transmittance of the filling layer 3602 and the ink layer 3603 is less than 0.05%. In an embodiment, a total light transmittance of the filling layer 3602 and the ink layer 3603 is 0. In an embodiment, a difference between a heat shrinkage of the filling layer 3602 and a heat shrinkage of the woven glass fiber plate layer 3601 and a difference between a heat shrinkage of the ink layer 3603 and the heat shrinkage of the woven glass fiber plate layer 3601 do not exceed 20% of the heat shrinkage of the woven glass fiber plate layer 3601. In an embodiment, a difference between a heat shrinkage of the filling layer 3602 and a heat shrinkage of the woven glass fiber plate layer 3601 and a difference between a heat shrinkage of the ink layer 3603 and the heat shrinkage of the woven glass fiber plate layer 3601 do not exceed 15% of the heat shrinkage of the woven glass fiber plate layer 3601. In an embodiment, a difference between a heat shrinkage of the filling layer 3602 and a heat shrinkage of the woven glass fiber plate layer 3601 and a difference between a heat shrinkage of the ink layer 3603 and the heat shrinkage of the woven glass fiber plate layer 3601 do not exceed 10% of the heat shrinkage of the woven glass fiber plate layer 3601. In this solution, the total light transmittance of the filling layer 3602 and the ink layer 3603 is less than 0.05%, and when the difference between the heat shrinkage of the filling layer 3602 and the heat shrinkage of the woven glass fiber plate layer 3601 and the difference between the heat shrinkage of the ink layer 3603 and the heat shrinkage of the woven glass fiber plate layer 3601 do not exceed 20% of the heat shrinkage of the woven glass fiber plate layer 3601, a fiber woven texture can be covered, and no fiber woven texture is formed at the filling layer 3602 and even the ink layer 3603 during hot pressing, so that display of an optical texture such as glare is not affected. In an embodiment, the filling layer 3602 may be further replaced by a cover resin layer. It may be understood that a difference between the cover resin layer and the filling layer 3602 lies in that, at the filling layer, it is mainly a filler that performs a covering function, and a resin is used to form a film, while at the cover resin layer, it is mainly a resin, such as a macromolecular resin that has a relatively high covering capability, that performs a covering function; and requirements for a thickness, a light transmittance, and a heat shrinkage of the cover resin layer are the same as those of the filling layer.

In an embodiment, the battery cover 300 further includes a matte layer 3607 disposed at the plastic substrate layer 3606, so that the battery cover 300 has both a glare effect and an advanced matte effect. The matte layer 3607 may be obtained by performing flow coating, spraying, or inkjetting on the plastic base layer 3606 by using a matte coating.

In an embodiment, the ink layer 3603, the optical coating layer 3604, the texture layer 3605, the plastic substrate layer 3606, and the matte layer 3607 form a laminated structure of a decorative film with glare and matte effects.

In an embodiment, the battery cover 300 further includes an adhesive layer (not shown in the figure), where the adhesive layer may be disposed between the ink layer 3603 and the filling layer 3602, or may be disposed between the woven glass fiber plate layer 3601 and the filling layer 3602, to perform an adhesive function. In an embodiment, a difference between a heat shrinkage of the adhesive layer and a heat shrinkage of the woven glass fiber plate layer 3601 does not exceed 20% of the heat shrinkage of the woven glass fiber plate layer 3601. In an embodiment, a difference between a heat shrinkage of the adhesive layer and a heat shrinkage of the woven glass fiber plate layer 3601 does not exceed 15% of the heat shrinkage of the woven glass fiber plate layer 3601. In an embodiment, a difference between a heat shrinkage of the adhesive layer and a heat shrinkage of the woven glass fiber plate layer 3601 does not exceed 10% of the heat shrinkage of the woven glass fiber plate layer 3601. It may be understood that when the filling layer 3602 and the ink layer 3603 have enough covering power, this solution has no limitation on covering power, namely, a light transmittance of the adhesive layer. In an embodiment, the adhesive layer may also have covering power, and a light transmittance of the adhesive layer is less than 50%. In an embodiment, a total thickness of the filling layer 3502 and the adhesive layer is less than 0.2 mm.

The battery cover may be prepared according to the foregoing three methods. Details are not described herein again in the present invention.

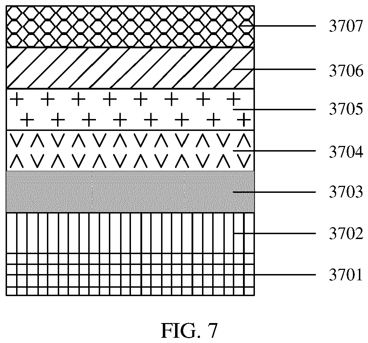

FIG. 7 is a schematic diagram of a structure of a battery cover according to a third embodiment of this application. In this embodiment, the battery cover 300 includes a woven glass fiber plate layer 3701, a unidirectional glass fiber plate layer 3702, an ink layer 3703, an optical coating layer 3704, a texture layer 3705, and a plastic substrate layer 3706 that are sequentially laminated. Performance parameters of the woven glass fiber plate layer 3701, the ink layer 3703, the optical coating layer 3704, the texture layer 3705, and the plastic substrate layer 3706 are the same as those described above. Details are not described herein again in the present invention.

The ink layer 3703 is used as a protective layer of the optical coating layer 3704, and is also used to implement a shielding function with the unidirectional glass fiber plate layer 3702. In an embodiment, a thickness of the ink layer 3703 is 10~60 µm. In an embodiment, a thickness of the ink layer 3703 is 15~50 µm. In an embodiment, the ink layer 3703 may be a black ink layer, a white ink layer, or a gray ink layer, and a light transmittance thereof is less than 0.05%. In an embodiment, a light transmittance of the ink layer 3703 is 0. The ink layer 3703 may be formed at the optical coating layer 3704 through screen printing, coating, or spraying.

In an embodiment, a total thickness of the ink layer 3703, the optical coating layer 3704, the texture layer 3705, and the plastic substrate layer 3706 is less than 0.15 mm.

In this solution, the unidirectional glass fiber plate layer 3702 and the ink layer 3703 are used to shield a fiber woven texture, so that display of an optical texture effect is not affected after 3D hot pressing. The unidirectional glass fiber plate layer 3702 is a plate made of unidirectional glass fiber, where the glass fiber includes but is not limited to E-glass fiber, S-glass fiber, C-glass fiber, A-glass fiber, A3 steel, and the like, and may be the same as or different from a glass fiber material of the woven glass fiber plate layer 3701. In an embodiment, a resin solution includes a matrix resin, a curing agent, a promoter, and a solvent. In an embodiment, the matrix resin is a thermosetting resin, and includes but is not limited to a bisphenol A epoxy resin, a phenolic epoxy resin, an alicyclic epoxy resin, a nitrogen-containing multifunctional epoxy resin, a phenolic resin, a bismaleimide resin, a benzoxazine resin, and the like. In an embodiment, the curing agent may be selected from a phenolic type curing agent, an acid anhydride curing agent, an amine curing agent, a dicyandiamide curing agent, or the like, for example, a nadikic anhydride, a methylnadikic anhydride, a methyl tetrahydrophthalic anhydride, a diphenyl ether tetra-phthalic anhydride, a benzophenonetetracarboxylic dianhydride, a methyl-cyclohexene-tetracarboxylic anhydride, a diphenylbenzidine, or a dicyandiamide. In an embodiment, the promoter includes an imidazole promoter or an amine promoter, such as imidazole or 2-methylimidazole. In an embodiment, the thermosetting resin is a thermosetting epoxy resin, and the curing agent is an amine curing agent. In an embodiment, the resin solution includes a thermoplastic resin and a solvent, and the thermoplastic resin includes but is not limited to a thermoplastic polyurethane, a thermoplastic polyamide, and the like.

In an embodiment, a thickness of the unidirectional glass fiber plate layer 3702 is less than 0.2 mm. In an embodiment, a thickness of the unidirectional glass fiber plate layer 3702 is less than 0.15 mm. In an embodiment, a light transmittance of the unidirectional glass fiber plate layer 3702 is less than 0.05%. In an embodiment, a thickness of the unidirectional glass fiber plate layer 3702 is 0.

In an embodiment, a total light transmittance of the unidirectional glass fiber plate layer 3702 and the ink layer 3703 is less than 0.05%. In an embodiment, a total light transmittance of the unidirectional glass fiber plate layer 3702 and the ink layer 3603 is less than 0. In an embodiment, a difference between a heat shrinkage of the unidirectional glass fiber plate layer 3702 and a heat shrinkage of the woven glass fiber plate layer 3701 and a difference between a heat shrinkage of the ink layer 3703 and the heat shrinkage of the woven glass fiber plate layer 3701 do not exceed 20% of the heat shrinkage of the woven glass fiber plate layer 3701. In an embodiment, a difference between a heat shrinkage of the unidirectional glass fiber plate layer 3702 and a heat shrinkage of the woven glass fiber plate layer 3701 and a difference between a heat shrinkage of the ink layer 3703 and the heat shrinkage of the woven glass fiber plate layer 3701 do not exceed 15% of the heat shrinkage of the woven glass fiber plate layer 3701. In an embodiment, a difference between a heat shrinkage of the unidirectional glass fiber plate layer 3702 and a heat shrinkage of the woven glass fiber plate layer 3701 and a difference between a heat shrinkage of the ink layer 3703 and the heat shrinkage of the woven glass fiber plate layer 3701 do not exceed 10% of the heat shrinkage of the woven glass fiber plate layer 3701. In this solution, a total light transmittance of the unidirectional glass fiber plate layer 3702 and the ink layer 3703 is less than 0.05%, and when the difference between the heat shrinkage of the unidirectional glass fiber plate layer 3702 and the heat shrinkage of the woven glass fiber plate layer 3701 and the difference between the heat shrinkage of the ink layer 3703 and the heat shrinkage of the woven glass fiber plate layer 3701 do not exceed 20% of the heat shrinkage of the woven glass fiber plate layer 3701, a fiber woven texture can be covered, and no fiber woven texture is formed at the ink layer 3703 during hot pressing, so that display of an optical texture such as highlight is not affected.

In an embodiment, the battery cover 300 further includes a matte layer 3707 disposed at the plastic substrate layer 3706, so that the battery cover 300 has both a glare effect and an advanced matte effect. The matte layer 3707 may be obtained by performing flow coating, spraying, or inkjetting on the plastic base layer 3706 by using a matte coating.

In an embodiment, the ink layer 3703, the optical coating layer 3704, the texture layer 3705, the plastic substrate layer 3706, and the matte layer 3707 form a laminated structure of a decorative film with glare and matte effects.

In an embodiment, the battery cover 300 further includes an adhesive layer (not shown in the figure) that is disposed between the ink layer 3703 and the unidirectional glass fiber plate layer 3702, to perform an adhesive function. In an embodiment, a difference between a heat shrinkage of the adhesive layer and a heat shrinkage of the woven glass fiber plate layer 3701 does not exceed 20% of the heat shrinkage of the woven glass fiber plate layer 3701. In an embodiment, a difference between a heat shrinkage of the adhesive layer and a heat shrinkage of the woven glass fiber plate layer 3701 does not exceed 15% of the heat shrinkage of the woven glass fiber plate layer 3701. In an embodiment, a difference between a heat shrinkage of the adhesive layer and a heat shrinkage of the woven glass fiber plate layer 3701 does not exceed 10% of the heat shrinkage of the woven glass fiber plate layer 3701. It may be understood that when the unidirectional glass fiber plate layer 3702 and the ink layer 3703 have enough covering power, this solution has no limitation on covering power, namely, a light transmittance of the adhesive layer. In an embodiment, the adhesive layer may also have covering power, and a light transmittance of the adhesive layer is less than 50%. In an embodiment, a total thickness of the unidirectional glass fiber plate layer 3602 and the adhesive layer is less than 0.2 mm.

The battery cover may be prepared according to the foregoing three methods. Details are not described herein again in the present invention.

After the 3D battery cover provided in the present invention is assembled with components such as a display screen, a middle frame, a main board, a memory, and a power supply, a mobile phone terminal may be obtained. When a user uses the mobile phone terminal, a battery cover of the mobile phone terminal is of a glass plate structure, and has a high-light mirror effect. When the user uses the mobile phone terminal, the battery cover has a glare effect similar to a CD texture or a laser texture, does not present a woven texture, and is not affected by a woven texture, and a back cover of the mobile phone presents rich optical effects. Further, when the battery cover includes a matte layer, the battery cover has a surface-frosted effect, and does not present a woven texture of a woven glass fiber plate, and the mobile phone is relatively beautiful.

The following further describes the 3D battery cover of a mobile phone provided in this application with reference to embodiments.

### Embodiment 1

A decorative film is provided, and the decorative film includes a PC substrate layer, a UV film transferred onto the PC substrate layer, an optical coating layer formed on the UV film by using a PVD coating layer, and an ink layer sprayed on the optical coating layer, where a thickness of the PC substrate layer is 0.1 mm, a tensile strength is 50 MPa, and an elongation is 180%; and a thickness of the UV film is 10 µm, a thickness of the optical coating layer is 500 nm, and a thickness of the ink layer is 50 µm.

A woven glass fiber cloth is coated in a resin solution including an epoxy resin and an amine curing agent, and is dried to obtain a prepreg with a thickness of 0.1 mm. Four layers of woven glass fiber cloth prepreg are laminated in a 3D mold, and are cut and hot pressed at 180 °C for 20 minutes, and then cold pressed at normal temperature at 0.5 MPa for 60s to form a 3D glass fiber plate. The decorative film, an adhesive, and the 3D glass fiber plate are laminated under vacuum and at 60°C, placed on a pre-laminating jig, then hot pressed for the second time 120°C for 40s for lamination, and then cold pressed at normal temperature at 0.5 MPa for 60s.

In the obtained laminated structure, CNC is performed to leave an epitaxial gate location, and a jig is designed to perform matte spraying, to form a matte layer with a thickness of 20 µm, so as to obtain a 3D battery cover with both glare and matte effects.

In the laminated structure, a heat shrinkage difference between the PC substrate layer of the decorative film, an adhesive layer, and the glass fiber plate layer does not exceed 20%.

After the 3D battery cover provided in this embodiment is assembled with components such as a display screen, a middle frame, a main board, a memory, and a power supply, a mobile phone terminal may be obtained. When a user uses the mobile phone terminal, a battery cover of the mobile phone terminal is of a glass plate structure, has a matte effect and a glare effect such as a CD texture or a laser texture, does not present a woven texture of a woven glass fiber plate, and is not affected by a woven texture, and rich optical effects are presented.

### Embodiment 2

A difference from Embodiment 1 lies in that the decorative film includes a matte layer that is coated on the other side of the PC substrate layer and has a thickness of 20 µm layer, and subsequently no matte layer needs to be sprayed again.

### Embodiment 3

A difference from Embodiment 1 lies in that a woven glass fiber cloth is coated in a thermoplastic resin solution, and is dried to obtain a prepreg with a thickness of 0.1 mm. Four layers of woven glass fiber cloth prepreg are laminated, cut, and cured at 160 °C for 20 minutes to obtain a glass fiber plate. The decorative film, an adhesive, and glass fiber plate are laminated under vacuum and at 60°C, placed on a pre-laminating jig, and hot pressed at 120°C for 40s for lamination, to obtain a plane laminated structure.

The laminated structure obtained by performing CNC is softened in a 3D mold at 190 °C for 20 minutes to obtain a 3D laminated structure through thermal bending molding.

In the obtained 3D laminated structure, CNC is performed to leave an epitaxial gate location, and a jig is designed to perform matte spraying, to form a matte layer with a thickness of 20 µm, so as to obtain a 3D battery cover with the glare and matte effects.

In the laminated structure, a heat shrinkage difference between the PC substrate layer of the decorative film, an adhesive layer, and the glass fiber plate layer does not exceed 20%.

### Embodiment 4

A difference from Embodiment 3 lies in that an adhesive is replaced with a cover resin to form a cover resin layer, so as to further increase covering power, where a thickness of the cover resin layer is 0.1 mm.

A decorative film and the cover resin are pre-laminated under vacuum and at 60 °C, laminated with four layers of prepreg in a 3D mold, heated to 180 °C at a rate of 25°C/min, 3D hot pressed at 2 MPa for 15 minutes, and then cold pressed at normal temperature for 10 minutes, to obtain a 3D laminated structure.

In the obtained 3D laminated structure, CNC is performed to leave an epitaxial gate location, and a jig is designed to perform matte spraying, to form a matte layer with a thickness of 20 µm, so as to obtain a 3D battery cover with the glare and matte effects.

In the laminated structure, a heat shrinkage difference between the PC substrate layer of the decorative film, the cover resin layer, and the glass fiber plate layer does not exceed 20%.

### Embodiment 5

A difference from Embodiment 1 lies in that a structure formed by one layer of unidirectional glass fiber cloth replaces one layer of prepreg, and a structure formed by a unidirectional glass fiber cloth is obtained by coating a unidirectional glass fiber cloth in a resin solution including an epoxy resin and an amine-type curing agent, and then drying the unidirectional glass fiber cloth.

After the 3D battery cover provided in this embodiment is assembled with components such as a display screen, a middle frame, a main board, a memory, and a power supply, a mobile phone terminal may be obtained. When a user uses the mobile phone terminal, a battery cover of the mobile phone terminal is of a glass plate structure, has a matte effect and a glare effect such as a CD texture or a laser texture, does not present a woven texture of a woven glass fiber plate, and is not affected by a woven texture, and rich optical effects are presented.

The foregoing descriptions are merely specific implementations of this application, but are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A housing assembly, comprising a woven glass fiber plate layer, a cover layer, an ink layer, an optical coating layer, a texture layer, and a plastic substrate layer that are laminated, wherein
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

2. A housing assembly, comprising a woven glass fiber plate layer, a cover layer, and a decorative layer that are laminated, wherein the decorative layer comprises an ink layer, an optical coating layer, a texture layer, and a plastic substrate layer that are laminated, and the ink layer is in contact with the cover layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

3. A housing assembly, comprising a woven glass fiber plate layer, a cover layer, an ink layer, and a decorative layer that are laminated, wherein the decorative layer comprises an optical coating layer, a texture layer, and a plastic substrate layer that are laminated, and the optical coating layer is in contact with the ink layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

4. The housing assembly according to claim 2 or 3, wherein the decorative layer further comprises a matte layer disposed at the plastic substrate layer.

5. The housing assembly according to any one of claims 1 to 3, further comprising a matte layer disposed at the plastic substrate layer.

6. The housing assembly according to any one of claims 1 to 5, wherein the cover layer is an adhesive layer;
a thickness of the adhesive layer does not exceed 0.15 mm; and
a heat shrinkage difference between the woven glass fiber plate layer, the adhesive layer, and the ink layer does not exceed 15%.

7. The housing assembly according to any one of claims 1 to 5, wherein the cover layer is a packing layer;
a thickness of the packing layer does not exceed 0.15 mm; and
a heat shrinkage difference between the woven glass fiber plate layer, the packing layer, and the ink layer does not exceed 15%.

8. The housing assembly according to claim 7, further comprising an adhesive layer disposed between the packing layer and the ink layer.

9. The housing assembly according to any one of claim 8, wherein a total thickness of the packing layer and the adhesive layer does not exceed 0.15 mm; and
a heat shrinkage difference between the woven glass fiber plate layer, the packing layer, the adhesive layer, and the ink layer does not exceed 15%.

10. The housing assembly according to any one of claims 1 to 5, wherein the cover layer is a cover resin layer;
a thickness of the cover resin layer does not exceed 0.15 mm; and
a heat shrinkage difference between the woven glass fiber plate layer, the cover resin layer, and the ink layer does not exceed 15%.

11. The housing assembly according to any one of claims 1 to 5, wherein the cover layer is a unidirectional glass fiber plate layer.

12. The housing assembly according to claim 11, further comprising an adhesive layer disposed between the filling layer and the ink layer;
a light transmittance of the adhesive layer does not exceed 0.05%;
a thickness of the adhesive layer does not exceed 0.15 mm; and
a heat shrinkage difference between the woven glass fiber plate layer, the unidirectional glass fiber plate layer, the adhesive layer, and the ink layer does not exceed 15%.

13. The housing assembly according to any one of claims 1 to 12, wherein the housing assembly is a battery cover of an intelligent terminal.

14. A method for preparing a housing assembly, comprising the following steps:
performing 3D hot pressing molding on the woven glass fiber cloth prepreg, and then sequentially laminating a cover layer and a decorative layer for hot pressing for the second time, to obtain the housing assembly, where
the decorative layer comprises an ink layer, an optical coating layer, a texture layer, and a plastic substrate layer that are laminated, and the ink layer is in contact with the cover layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

15. A method for preparing a housing assembly, comprising the following steps:
pre-laminating a cover layer and a decorative layer, to obtain a pre-laminated layer; and
laminating the pre-laminated layer and a woven glass fiber cloth prepreg, and then performing 3D hot pressing molding, to obtain the housing assembly, where
the decorative layer comprises an ink layer, an optical coating layer, a texture layer, and a plastic substrate layer that are laminated, and the ink layer is in contact with the cover layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

16. A method for preparing a housing assembly, comprising the following steps:
impregnating and curing a woven glass fiber cloth in a thermoplastic resin, to obtain a thermoplastic glass fiber plate;
pre-laminating the thermoplastic glass fiber plate, a cover layer, and a decorative layer, and performing plane hot pressing to obtain a plane laminated structure;
softening the plane laminated structure and performing 3D thermal bending molding, to obtain the housing assembly; where
the decorative layer comprises an ink layer, an optical coating layer, a texture layer, and a plastic substrate layer that are laminated, and the ink layer is in contact with the cover layer;
a heat shrinkage difference between the woven glass fiber plate layer, the cover layer, and the ink layer does not exceed 20%;
a thickness of the cover layer does not exceed 0.2 mm;
a thickness of the ink layer does not exceed 0.1 mm;
a total light transmittance of the cover layer and the ink layer does not exceed 0.05%; and
an elongation of the plastic substrate layer is not less than 150%, and a tensile strength of the plastic substrate layer is not less than 45 MPa.

17. The method according to any one of claims 14 to 16, wherein the decorative layer further comprises a matte layer disposed at the plastic substrate layer.

18. The method according to any one of claims 14 to 16, further comprising:
coating a matte layer at the plastic substrate layer.

19. A terminal, comprising the housing assembly according to any one of claims 1 to 13.
